# FASCICULE DE BREVET EUROPEEN

(11) **EP 2 902 547 B1**
(45) Date de publication et mention de la délivrance du brevet: **07.09.2016**
(21) Numéro de dépôt: 14195877.7
(22) Date de dépôt: 02.12.2014
(51) Int. Cl.: E02D 1/00, G01V 3/40, E02D 3/12

(54) **Procédé de densification de sol**
Bodenverdichtungsverfahren
Floor densification method

(30) Priorité: 31.01.2014 FR 1450798
(43) Date de publication de la demande: 05.08.2015
(73) Titulaire: Grau, Claude, 95290 l'Isle-Adam (FR)
(72) Inventeur: Grau, Claude, 95290 l'Isle-Adam (FR)
(74) Mandataire: Ipside

(56) Documents cités:
- EP-A1- 2 543 769
- RU-C1- 2 152 058

## Description

L'invention se rapporte à un procédé de densification de sol. L'invention concerne le traitement de sols autour d'un édifice existant ou en préparation d'une construction future.

Il arrive qu'un bâtiment ou un ouvrage de génie civil, existant ou à venir, constitue une charge trop importante pour le sol concerné, qui présente alors un déficit dit de compression : le sol risque de s'affaisser, déstabilisant l'ouvrage.

Par ailleurs, la nature du sol autour des fondations de certaines constructions peut présenter un manque de résistances à des vents extrêmes. Les fondations présentent alors un risque d'arrachement du sol.

De tels risques peuvent être prévenus par des traitements visant à densifier le sol autour des fondations, afin de le rendre plus résistant.

Il est connu, par exemple du document EP0851064, de réaliser des forages dans le sol autour de fondations d'un bâtiment, puis d'injecter dans ces forages une résine expansive qui réalise un compactage local du sol.

Une telle méthode présente néanmoins plusieurs inconvénients. Par exemple, afin de positionner judicieusement les forages, il est nécessaire de sonder le sol afin de déterminer les zones à traiter, ainsi que les obstacles enterrés à contourner. Ces obstacles sont par exemple les fondations du bâtiment ou de l'ouvrage, ou encore des réseaux enterrés de type réseau d'eau, de gaz ou de télécommunications.

Jusqu'à présent, cette détermination s'effectuait par recoupement des données recueillies via une succession de méthodes de détection telles que radar de sol, détection acoustique, vibratoire, thermographie, tomographie et engins mécanisés, chaque méthode ayant ses limites. Le document EP0851064 décrit notamment le forage à travers les fondations et non en contournant ces dernières.

De plus, il est utile de contrôler l'injection et l'expansion de la résine expansive, notamment afin de stopper l'injection avant que le volume de résine soit trop important. Dans le document EP0851064, le contrôle est effectué en observant le soulèvement de la surface de la zone de sol traitée ou d'un bâtiment situé sur cette zone, notamment à l'aide d'un niveau à laser.

Un tel soulèvement peut cependant être observé trop tard pour éviter une déstabilisation du bâtiment. Par ailleurs, cette méthode de contrôle ne permet pas de vérifier l'efficacité du traitement sur l'ensemble d'une zone étendue.

Une autre méthode basée sur la tomographie du sol injecté est connue de l'antériorité EP2543769 A1.

5 La présente invention a pour objet d'améliorer les procédés existants, par l'ajout d'une étape de contrôle permettant de déterminer précisément la nature du sol à traiter, y compris sa composition géologique, ses cavités et ses obstacles enterrés, notamment la géométrie de fondations. Ces informations permettent de choisir le plus judicieusement possible la position, l'orientation et la profondeur des trous de forage, ainsi que la nature et la quantité de résine à injecter dans lesdits trous pour arriver au résultat souhaité.

A cet effet, la présente invention se rapporte à un procédé de traitement pour densification de sols, comprenant le forage, dans une zone de sol, d'un ensemble de trous espacés les uns des autres, ainsi que l'injection dans le sol, à l'intérieur desdits trous, d'une composition chimique expansive, ladite expansion conduisant à une densification du sol au voisinage de ladite composition chimique. Le procédé comprend au préalable une étape de contrôle de la zone de sol à forer, ladite étape de contrôle étant telle qu'un appareil à induction électromagnétique effectue une mesure de résistivité en plusieurs points de la zone de sol, chaque point étant identifié par des coordonnées spatiales, puis par l'intermédiaire d'une base de données, chacune desdites résistivités est corrélée à un matériau, de sorte à générer une représentation spatiale de la zone de sol.

Une telle représentation spatiale, de type imagerie, associe par exemple chaque résistivité à une couleur distincte. Elle fournit ainsi les informations nécessaires aux choix des paramètres de forage et d'injection.

Préférentiellement, le procédé comprend également une étape de contrôle après l'étape d'injection, ladite étape de contrôle permettant de générer une représentation spatiale de la zone de sol traitée. Il est ainsi possible de vérifier l'efficacité du traitement et éventuellement d'intervenir à nouveau dans certaines zones.

Préférentiellement, le procédé comprend également au moins une étape de contrôle durant l'étape d'injection, ladite étape de contrôle permettant de générer une représentation spatiale de la zone de sol en cours de traitement. Il est ainsi possible de vérifier le bon déroulement de l'injection en cours.

De préférence, la mesure de résistivité s'effectue au moyen de l'émission, par l'appareil à induction électromagnétique, de 14 fréquences échelonnées de 2,5 KHz à 250 KHz. Une telle méthode et un tel appareil sont notamment décrits dans le document RU2152058.

De préférence, la composition chimique expansive comprend un composant de type polyol et un composant de type isocyanate. Une telle composition est notamment décrite dans le document EP0851064.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : vue en coupe d'une zone de sol en cours de traitement selon un exemple de réalisation de l'invention ;
- Figure 2 : vue en coupe d'une zone de sol traitée selon un exemple de réalisation de l'invention ;
- Figure 3 : vue en coupe d'une zone de sol traitée selon un autre exemple de réalisation de l'invention.

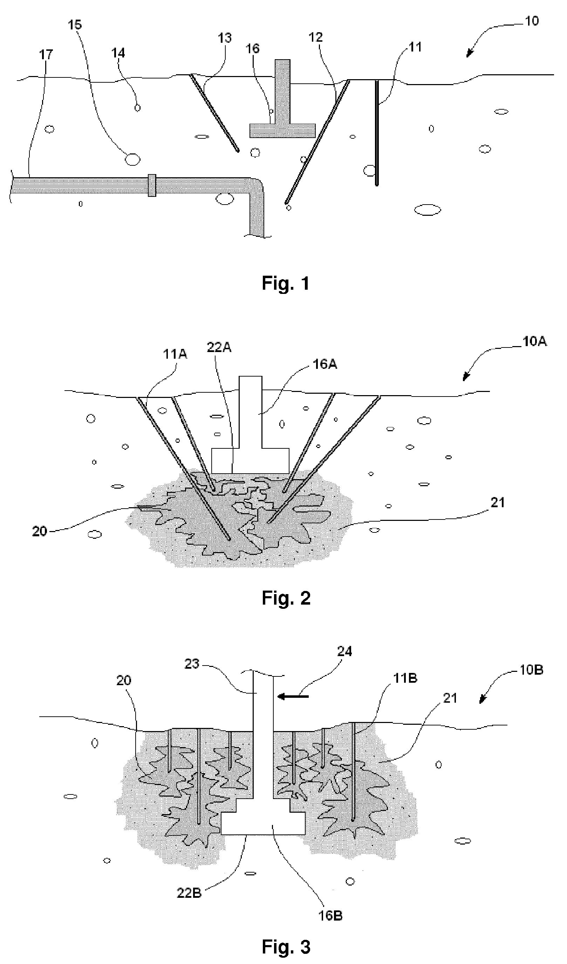

La figure 1 représente une vue en coupe d'une zone de sol en cours de traitement selon un exemple de réalisation du procédé de l'invention.

Le procédé, selon l'exemple de la figure 1, comprend le forage, dans une zone 10 de sol, d'un ensemble de trous (11, 12, 13) espacés les uns des autres, formant un maillage du sol. Les trous (11, 12, 13) ont préférentiellement des profondeurs différentes. Par ailleurs, les trous ont un diamètre largement inférieur à leur profondeur, par exemple un diamètre de 3 à 4 cm pour une profondeur allant de un à plusieurs mètres. L'espacement entre deux trous voisins dépend de la nature et de la géologie du terrain, qui sont déterminées comme décrit plus loin.

Un trou (11) peut être disposé verticalement ou encore incliné (12, 13) par rapport à la verticale. Une telle inclinaison peut avoir pour objet d'éviter un obstacle souterrain, comme décrit plus loin.

Afin de choisir l'emplacement et la profondeur des trous (11, 12, 13), l'invention comporte une étape préalable de réalisation d'une représentation spatiale de la zone 10 de sol. Une telle représentation en trois dimensions permet notamment de localiser des porosités et des anfractuosités (14, 15) du sol, nécessitant une densification. Une telle représentation fournit d'autres informations sur la géologie du sol, telle que la nature des différentes couches, la présence de galeries souterraines ou de nappes d'eau. Une telle représentation permet également de choisir l'emplacement et l'inclinaison des trous (11, 12, 13) de manière à éviter de percer des fondations 16 d'un ouvrage existant, ou un réseau 17 enterré tel qu'un réseau d'eau ou de gaz, ou un autre type d'obstacle.

Afin de déterminer une structure de la zone 10 de sol, une mesure de résistivité est effectuée en une multitude de points de la zone de sol, chaque point étant identifié par des coordonnées spatiales (x, y, z). La mesure des résistivités est effectuée au moyen d'un appareil à induction de champs électromagnétiques. Un tel appareil est notamment décrit dans le document RU2152058.

De préférence, l'appareil émet simultanément 14 fréquences échelonnées de 2,5 KHz à 250 KHz, ce qui lui permet de mesurer la distribution des résistivités dans la zone 10 de sol, jusqu'à 10 mètres de profondeur.

Un protocole préférentiel de recueil des données se fait en connectant l'appareil de mesure à un ordinateur, par exemple via le système Bluetooth. Un opérateur se déplace sur la zone 10 de sol en maintenant l'appareil à 15 cm du sol et en procédant par tranches de 1,20 mètres sur une bande de 1 mètre puis il enregistre la séquence qu'il vient d'effectuer. De préférence, un GPS intégré à l'appareil assure la localisation spatiale de toutes les mesures effectuées.

L'ordinateur est relié à une base de données qui identifie chaque matériau composant la zone de sol, en fonction de la résistivité mesurée en chaque point (x, y, z). Un programme mis en oeuvre par l'ordinateur peut ainsi générer une représentation spatiale de la zone de sol. Il s'agit par exemple d'une image en trois dimensions où les différentes résistivités, ou les différents matériaux, sont chacun modélisés par une couleur particulière. Il peut également s'agir d'images en deux dimensions, comme une série de vues en coupes verticales et/ou horizontales de la zone 10 de sol.

En raison de la visualisation en couleurs des différentes résistivités, les anfractuosités (14, 15) ainsi que les différents obstacles (16, 17) apparaissent sur les images avec des contours bien définis, ce qui permet de positionner judicieusement les trous (11, 12, 13). L'étape de forage peut ainsi avoir lieu avec précision, en évitant notamment les obstacles (16, 17) tels que des fondations ou des réseaux enterrés, et en tenant compte de la géologie du sol.

Chaque trou (11, 12, 13) est ensuite équipé d'un tube rigide plongeur, ou lance d'injection, portant à son extrémité une tête d'injection. Chaque tube est relié à une presse à injection par des tubes flexibles. La presse envoie dans lesdits tubes une composition chimique expansive. Il s'agit par exemple d'une résine polyuréthane bi-composants, l'un des composants comprenant un polyol et l'autre composant comprenant un isocyanate.

Une telle résine, notamment décrite dans le document EP0851064, est disponible commercialement. Son utilisation est connue dans le domaine des matériaux isolants, ainsi que dans le domaine du génie civil pour colmater les arrivées d'eau importantes.

Une fois injectée dans le sol, la composition chimique augmente de volume en raison de la réaction chimique entre ses composants. Lesdits composants peuvent également réagir avec l'eau et/ou le CO₂ contenu dans le sol, ce qui influence le volume d'expansion. A titre indicatif, l'expansion de la composition est d'environ 3 fois son volume initial dans un sol sec et d'environ 8 fois son volume initial dans un sol humide.

Les figures 2 et 3 représentent des zones de sol (10A, 10B) après des traitements selon deux modes distincts de réalisation de l'invention.

La composition, en augmentant de volume, pénètre dans les porosités et les anfractuosités du sol en contact avec les trous (11 A, 11 B) formant le maillage du sol (10A, 10B). La composition 20 expansée et solidifiée adopte donc des formes qui se développent de manière analogue à des racines ou à des branches d'arbre.

Par ailleurs, l'expansion de la composition induit une succession de micro-claquages du terrain 21 situé à proximité immédiate de ladite composition. La zone de sol se retrouve donc densifiée.

Les étapes de forage et d'injection sont similaires à des étapes de forage et d'injection décrites dans le document EP0851064.

Préférentiellement, la presse et/ou les tubes flexibles sont munis de résistances chauffantes. Le maintien de la composition à une température élevée durant son injection permet de maintenir sa viscosité à un faible niveau.

Ladite température influence également le temps de prise de la résine, qui peut être régulé par l'addition d'un ou de plusieurs adjuvants à la composition. Il peut notamment être utile de ralentir la solidification de la résine, afin de lui permettre de se répandre plus loin dans les anfractuosités du sol. Dans d'autres cas, on cherchera au contraire à assurer une prise rapide pour une densité maximale.

Préférentiellement, durant l'injection, une ou plusieurs mesures successives de résistivités sont effectuées sur la zone 10 en cours de traitement et des représentations de ladite zone sont générées. On peut ainsi contrôler visuellement le cheminement et l'expansion de la composition chimique, afin de moduler le débit et la durée d'injection en fonction du résultat souhaité.

Préférentiellement, un niveau à eau et/ou un capteur de mouvements à gaz sont installés sur des structures existantes afin de s'assurer de la stabilité de celles-ci pendant l'injection.

Préférentiellement, à la fin du traitement, les mesures de résistivités sont à nouveau effectuées sur la zone 10 traitée et une représentation spatiale de ladite zone est générée, afin de vérifier que la zone a été convenablement densifiée.

Préférentiellement, afin de confirmer les mesures de résistivité, la résistance du sol est mesurée avant et après les travaux au moyen d'un pénétromètre dynamique. Une telle mesure de résistance permet de confirmer la densification du sol traité en observant une augmentation de la résistance du sol après les travaux.

La figure 2 représente une zone de sol 10A comprenant des fondations 16A de bâtiment ou d'ouvrage d'art. La zone 10A est représentée après un traitement pour combler un déficit de compression.

A cet effet, la composition 20 est injectée en-dessous d'une limite inférieure 22A de la fondation 16A, le terme « limite inférieure » s'entendant par rapport à la verticale.

Ainsi, le sol est densifié sous la fondation 16A et est plus à même de recevoir et transmettre les charges en compression appliquées par ladite fondation. Les risques d'affaissement de terrain sous la fondation sont ainsi prévenus.

La figure 3 représente une zone de sol 10B comprenant des fondations 16B, par exemple d'un ouvrage d'art 23. La zone 10A est représentée après un traitement pour combler un déficit d'arrachement.

A cet effet, la composition 20 est injectée autour de ladite fondation 16B et au-dessus d'une limite inférieure 22B de ladite fondation, le terme « limite inférieure » s'entendant par rapport à la verticale.

Ainsi, le sol est densifié autour de la fondation 16B. En cas de vents violents représentés par la flèche 24, l'effort subi par l'ouvrage d'art 23 est compensé par le maintien des fondations 16B par la zone de sol 10B traitée. Le risque d'arrachement desdites fondations est ainsi prévenu.

Il est possible d'injecter la résine à la fois au-dessus et en-dessous des fondations, afin de combler simultanément un déficit de compression et d'arrachement.

Selon un exemple non représenté, il est également possible de traiter une zone de sol ne comprenant pas de fondations, afin par exemple de préparer le terrain à une future construction ou à un autre usage.

D'une manière générale, le traitement selon l'invention permet au sol de recevoir et transmettre les charges qu'on lui applique, d'augmenter le coefficient de frottement et de combler les déficits de compressions et d'arrachements d'une fondation. Il prévient des risques de tassements, d'affouillements, de réhydratation et de liquéfaction trop soudaines des sols en changeant la rhéologie du sol.

Ce procédé de densification permet la conception de barrages étanches dans le sol pour protection contre des venues d'eau.

Selon une variante de l'invention, la composition chimique a des propriétés d'isolant électrique. Le procédé permet alors la réalisation de barrages électriques et la canalisation de l'écoulement électrique dans le sol.

Selon une autre variante, la composition est formulée de manière à assurer une continuité électrique dans le sol, afin de permettre le bon fonctionnement des mises à la terre d'un édifice. A cet effet, un adjuvant de type poudre graphite ou autre élément carbone peut être ajouté à la composition.

Les matériels et les conditionnements des matières premières pour mettre en oeuvre ce procédé sont légers, notamment moins de 500 Kg par élément. Ces éléments sont donc héli-portables. Le procédé selon l'invention est non destructif, au contraire d'un terrassement par engin mécanique. D'un point de vue environnemental, la résine polyuréthane à l'état solide est inerte, non polluante et résiste très bien aux effets chimiques et agressifs du milieu géologique. Le bilan carbone du procédé est optimum puisque très peu ou pas du tout de moyens mécanisés sont utilisés sur les chantiers.

## Revendications

1. Procédé de traitement pour densification de sols, comprenant :
- le forage, dans une zone (10, 10A, 10B) de sol, d'un ensemble de trous (11, 12, 13) espacés les uns des autres,
- l'injection dans le sol, à l'intérieur desdits trous, d'une composition (20) chimique expansive, ladite expansion conduisant à une densification du sol (21) au voisinage de ladite composition chimique,
ledit procédé étant **caractérisé en ce qu'**il comprend au préalable une étape de contrôle de la zone de sol à forer, ladite étape de contrôle étant telle que :
- un appareil à induction électromagnétique effectue une mesure de résistivité en plusieurs points de la zone de sol, chaque point étant identifié par des coordonnées spatiales (x, y, z),
- par l'intermédiaire d'une base de données, chacune desdites résistivités est corrélée à un matériau, de sorte à générer une représentation spatiale de la zone de sol.

2. Procédé selon la revendication 1, tel qu'il comprend également une étape de contrôle après l'étape d'injection, ladite étape de contrôle permettant de générer une représentation spatiale de la zone de sol traitée.

3. Procédé selon la revendication 1 ou la revendication 2, tel qu'il comprend également au moins une étape de contrôle durant l'étape d'injection, ladite étape de contrôle permettant de générer une représentation spatiale de la zone de sol en cours de traitement.

4. Procédé selon l'une des revendications précédentes, tel que la mesure de résistivité s'effectue au moyen de l'émission, par l'appareil à induction électromagnétique, de 14 fréquences échelonnées de 2,5 KHz à 250 KHz.

5. Procédé selon l'une des revendications précédentes, tel que la composition chimique expansive comprend un composant de type polyol et un composant de type isocyanate.

6. Procédé selon l'une des revendications précédentes, pour combler un déficit de compression d'une zone de sol (10A) comprenant des fondations (16A), tel que la composition est injectée en-dessous d'une limite inférieure (22A) desdites fondations.

7. Procédé selon l'une des revendications 1 à 5, pour combler un déficit d'arrachement d'une zone de sol (10B) comprenant des fondations (16B), tel que la composition est injectée autour desdites fondations, au-dessus d'une limite inférieure (22B) desdites fondations.

8. Procédé de traitement d'une zone de sol selon l'une des revendications 1 à 5, tel que la zone de sol ne comprend pas de fondations.

9. Procédé selon l'une des revendications précédentes, tel que la composition chimique expansive comprend un adjuvant sous forme de poudre graphite.

## Patentansprüche

1. Behandlungsverfahren zur Verdichtung von Böden, das Folgendes umfasst:
Bohren einer Reihe von Löchern (11, 12, 13), die voneinander beabstandet sind, in einen Bodenbereich (10, 10A, 10B),
Einpressen einer expansiven chemischen Zusammensetzung (20) in den Boden, in die Löcher, wobei die Ausdehnung zu einer Verdichtung des Bodens (21) in der Nähe der chemischen Zusammensetzung führt,
wobei das Verfahren **dadurch gekennzeichnet ist, dass** es zunächst einen Schritt des Prüfens des Bodenbereichs, in dem die Bohrung vorgenommen werden soll, umfasst, wobei der Schritt des Prüfens umfasst, dass:
- eine Magnetinduktionsvorrichtung eine Widerstandsmessung an mehreren Punkten des Bodenbereichs durchführt, wobei jeder Punkt durch Raumkoordinaten (x, y, z) lokalisiert wird,
- jeder der Widerstände zur Erzeugung einer räumlichen Darstellung des Bodenbereichs durch eine Datenbank mit einem Material korreliert wird.

2. Verfahren nach Anspruch 1, das des Weiteren einen Schritt des Prüfens nach dem Schritt des Einpressens umfasst, wobei der Schritt des Prüfens die Erzeugung einer räumlichen Darstellung des behandelten Bodenbereichs gestattet.

3. Verfahren nach Anspruch 1 oder Anspruch 2, das des Weiteren mindestens einen Schritt des Prüfens während des Schritts des Einpressens umfasst, wobei der Schritt des Prüfens eine Erzeugung einer räumlichen Darstellung des Bodenbereichs während der Behandlung gestattet.

4. Verfahren nach einem der vorhergehenden Ansprüche, wobei die Widerstandsmessung mittels der Abgabe, durch die Magnetinduktionsvorrichtung, von 14 Frequenzen, die im Bereich von 2,5 kHz bis 250 kHz liegen, erfolgt.

5. Verfahren nach einem der vorhergehenden Ansprüche, wobei die expansive chemische Zusammensetzung eine Komponente vom Typ Polyol und eine Komponente vom Typ Isocyanat umfasst.

6. Verfahren nach einem der vorhergehenden Ansprüche zum Ausgleichen eines Verdichtungsdefizits eines Gründungen (16A) umfassenden Bodenbereichs (10A), bei dem die Zusammensetzung unter einer Untergrenze (22A) der Gründungen eingepresst wird.

7. Verfahren nach einem der Ansprüche 1-5 zum Ausgleichen eines Ausbruchsdefizits eines Gründungen (16B) umfassenden Bodenbereichs (10B), bei dem die Zusammensetzung um die Gründungen herum über einer Untergrenze (22B) der Gründungen eingepresst wird.

8. Verfahren zur Behandlung eines Bodenbereichs nach einem der Ansprüche 1-5, bei dem der Bodenbereich keine Gründungen umfasst.

9. Verfahren nach einem der vorhergehenden Ansprüche, wobei die expansive chemische Zusammensetzung einen Zusatzstoff in Form von Graphitpulver umfasst.

## Claims

1. Treatment method for densifying soils, comprising:
- drilling, in a soil zone (10, 10A, 10B), a set of holes (11, 12, 13) spaced apart from one another,
- injecting into the soil, in said holes, an expansive chemical composition (20), said expansion leading to a densification of the soil (21) in the vicinity of said chemical composition,
- said method being **characterized in that** it first comprises a step of checking of the soil zone to be drilled, said checking step being such that:
- an electromagnetic induction apparatus performs a measurement of resistivity at a number of points of the soil zone, each point being identified by spatial coordinates (x, y, z),
- via a data base, each of said resistivities is correlated with a material so as to generate a spatial representation of the soil zone.

2. Method according to Claim 1, such that it also comprises a checking step after the injection step, said checking step making it possible to generate a spatial representation of the soil zone treated.

3. Method according to Claim 1 or Claim 2, such that it also comprises at least one checking step during the injection step, said checking step making it possible to generate a spatial representation of the soil zone in the course of being treated.

4. Method according to one of the preceding claims, such that the resistivity measurement is performed by means of the emission, by the electromagnetic induction apparatus, of 14 frequencies staged from 2.5 KHz to 250 KHz.

5. Method according to one of the preceding claims, such that the expansive chemical composition comprises a polyol type component and a isocyanate type component.

6. Method according to one of the preceding claims, for filling a compression deficiency of a soil zone (10A) comprising foundations (16A), such that the composition is injected below a lower limit (22A) of said foundations.

7. Method according to one of Claims 1 to 5, for filling a pull-out deficiency of a soil zone (10B) comprising foundations (16B) such that the composition is injected around said foundations, above a lower limit (22B) of said foundations.

8. Method for treating a soil zone according to one of Claims 1 to 5, such that the soil zone does not include foundations.

9. Method according to one of the preceding claims, such that the expansive chemical composition comprises an additive in graphite powder form.
